# EUROPÄISCHE PATENTANMELDUNG

(11) **EP 4 775 003 A1**
(43) Veröffentlichungstag der Anmeldung: **15.07.2026**
(21) Anmeldenummer: 25209983.3
(22) Anmeldetag: 21.10.2025
(51) Int. Cl.: A01B 21/08, A01B 23/04, A01B 49/02

(54) **LANDWIRTSCHAFTLICHE BODENBEARBEITUNGSMASCHINE**

(30) Priorität: 10.01.2025 DE 102025100713
(71) Anmelder: Pöttinger Landtechnik GmbH, 4710 Grieskirchen (AT)
(72) Erfinder: HEHENBERGER, Ulrich, 4710 Grieskirchen (AT); STADLBAUER, Franz, 4710 Grieskirchen (AT); ZEHETNER, Florian, 4710 Grieskirchen (AT); ÖFFLER, Michael, 4710 Grieskirchen (AT); KIRCHMAYR, Alois, 4710 Grieskirchen (AT); KIRCHHOFER, Leon, 4710 Grieskirchen (AT)
(74) Vertreter: Lorenz Seidler Gossel Part. mbB

(57) **Zusammenfassung**

Die Erfindung betrifft eine landwirtschaftliche Bodenbearbeitungsmaschine, mit zumindest einer oder zumindest zwei hintereinander angeordneten Bodenwerkzeugreihen, die sich quer zur Fahrtrichtung erstrecken und jeweils eine Vielzahl nebeneinander angeordnete Bodenwerkzeuge wie Schrägscheiben zum Lockern und/oder Wenden des Bodens umfassen, sowie zumindest einer Folgewerkzeugreihe , die der zumindest einen Bodenwerkzeugreihe nachläuft und nebeneinander angeordnete Einebnungselemente zum Einebnen von durch die Bodenwerkzeuge hinterlassenen Bodenunebenheiten wie Furchen und/oder Dämmen aufweist, wobei die Einebnungselemente über die Arbeitsbreite der Folgewerkzeugreihe ungleichmäßig verteilt angeordnet sind, wobei sich Einebnungselemente-Gruppen, die mehrere benachbarte Einebnungselemente umfassen, mit Lücken, in denen die Folgewerkzeugreihe keine Einebnungselemente aufweist, abwechseln.

## Beschreibung

Die vorliegende Erfindung betrifft landwirtschaftliche Bodenbearbeitungsmaschinen wie z.B. eine Scheibenegge, mit zumindest einer oder zumindest zwei hintereinander angeordneten Bodenwerkzeugreihen, die sich quer zur Fahrtrichtung erstrecken und jeweils eine Vielzahl nebeneinander angeordnete Bodenwerkzeuge wie z.B. Schrägscheiben zum Lockern und/oder Wenden des Bodens umfassen, sowie zumindest einer Folgewerkzeugreihe, die der zumindest einen Bodenwerkzeugreihe nachläuft und nebeneinander angeordnete Einebnungselemente zum Einebnen von durch die Bodenwerkzeuge hinterlassenen Bodenunebenheiten wie Furchen und/oder Dämmen.

Solche landwirtschaftliche Bodenbearbeitungsmaschinen in Form von Scheibeneggen bzw. Grubbern sind üblicherweise als Anbaugeräte ausgebildet, die über einen Anbaubock oder ggf. auch als gezogene Geräte über eine Deichsel an einen Schlepper angebaut werden können, um den Stoppelteppich zu stürzen, Ernterückstände zu durchmischen, den Boden aufzulockern oder allgemein das Saatbett vorzubereiten. Dabei können solche Scheibeneggen als Einzelgerät ausgebildet, ggf. aber auch Teil einer Gerätekombination wie beispielsweise einer Sämaschinen-kombination sein.

Um eine effiziente Bodenbearbeitung zu erzielen, haben solche Scheibeneggen oder auch Grubber üblicherweise mehrere Bodenwerkzeugreihen, die sich quer zur Fahrtrichtung erstrecken und eine Vielzahl nebeneinander angeordneter, zur Fahrtrichtung schräg angestellte Schrägscheiben oder auch Grubberzinken umfassen, wobei es üblich ist, die Schrägscheiben einer hinterherlaufenden Reihe gegenläufig zu den Scheiben einer vorauslaufenden Reihe anzustellen, um eine intensivere Bodenbearbeitung zu erzielen und vor allen Dingen auch den Schrägzug der Scheiben auszugleichen. Ggf. können auch Schrägscheiben und Grubberzinken jeweils reihenweise hintereinander angeordnet werden oder auch gemischt in einer Reihe Verwendung finden. Diesbezüglich wurde auch schon vorgeschlagen, die Bodenwerkzeugreihen in sich zu unterteilen und innerhalb der Reihen die Scheiben gruppenweise gegenläufig schräg anzustellen, um den Schrägzug schon in der Bodenwerkzeugreihe selbst zu kompensieren. Während eine Schrägscheibengruppe zur linken Seite hin schräggestellt wird, ist eine andere Schrägscheibengruppe zur rechten Seite hin schräggestellt, wobei beispielsweise pro Bodenwerkzeugreihe zwei Schrägscheibengruppen vorgesehen und gegenläufig zueinander angestellt sein können.

Auch bei einer solchen Schrägscheibengruppierung innerhalb der Reihen können die hintereinander herlaufenden Reihen wiederum gegenläufige Schrägstellungen aufweisen, beispielsweise dergestalt, dass die Scheiben einer Reihe allesamt nach innen werfen und die Scheiben der anderen Reihe allesamt nach außen werfen.

Eine solche doppelt gegenläufige Schrägstellung der Scheiben, bei der Scheibengruppen innerhalb einer Reihe gegenläufig schräg angestellt und auch hintereinander herlaufende Scheibengruppen verschiedener Reihen gegenläufig zueinander schräggestellt sind, wird bisweilen auch als X-Anordnung bezeichnet, und zeichnet sich durch den Vorteil aus, dass die Maschine geradlinig im Wesentlichen ohne Seitenzug hinter dem Schlepper herläuft.

Eine Scheibenegge der genannten Art zeigt beispielsweise die Schrift EP 20 61 300 B1, bei der die Bodenwerkzeugreihen hinsichtlich der Scheibenschrägstellung mittig geteilt sind, sodass die Scheiben in der rechten Hälfte einer Reihe gegenläufig zu den Scheiben in der linken Hälfte der Reihe angestellt sind. Gleichzeitig sind hintereinander herlaufende Schrägscheibengruppen zueinander gegenläufig schräggestellt. Konkret wird dies dadurch erreicht, dass die Scheiben der vorauslaufenden Reihe allesamt nach außen werfen, während die Scheiben der nachlaufenden Reihe nach innen werfen.

Ähnliche Schiebeneggen sind auch in den Schriften DE 10 2010 054 946 B4 und WO 2012/079567 A2 sowie DE 362 682 C, DE 102 38 644 A1 und US 2,908,338 A gezeigt.

Auch wenn solche Scheibeneggen mit X-Anordnung der Schrägscheiben im Wesentlichen seitenzugfrei hinter dem Schlepper herlaufen, ergibt sich durch die X-Anordnung der Schrägscheiben die Problematik, dass üblicherweise der Mittelstreifen im Übergangsbereich zwischen den gegenläufig schräggestellten Scheiben unbearbeitet bleibt bzw. sich je nach Schrägstellung der nachlaufenden Bodenwerkzeugreihe eine Längsfurche oder ein Längswall aufgeworfenen Materials ergibt, sodass die von der Scheibenegge bearbeitete Fahrgasse nicht gleichmäßig über die gesamte Breite bearbeitet ist. Diese Problematik resultiert daraus, dass die unmittelbar benachbarten, zueinander gegenläufig schräggestellten Scheiben nicht beliebig nahe aneinander positioniert werden können, da sie sonst aufgrund ihrer gegenläufigen Schrägstellung miteinander kollidieren würden.

Es wurde daher bereits vorgeschlagen, zwischen den Bodenwerkzeugreihen weitere Bodenbearbeitungswerkzeuge vorzusehen, die zumindest näherungsweise in der Spur des Übergangsbereichs der gegenläufig schräggestellten Schrägscheibengruppen laufen und den von den Schrägscheiben unbearbeiteten Streifen bearbeiten sollen, vgl. beispielsweise EP 35 81 007 A1 oder US 9,313,937 B2. Solche zusätzlichen Schrägscheiben zwischen den eigentlichen Bodenwerkzeugreihen benötigen jedoch in Fahrtrichtung relativ viel Platz und schieben insbesondere die Bodenwerkzeugreihen in Fahrtrichtung relativ weit auseinander, vgl. beispielsweise EP 35 81 007 A1, wodurch die Bodenanpassung der Maschine leidet, insbesondere wenn die Bodenwerkzeugreihen nacheinander über Querbodenwellen hinwegfahren bzw. in diese eintauchen sollen. Es wurde auch schon vorgeschlagen, im Übergangsbereich zwischen den gegenläufig angestellten Schrägscheiben-Gruppen eine sogenannte Wellsechscheibe mit gewellter Randkontur anzuordnen, um den sich im genannten Übergangsbereich bildenden Damm zu glätten, was allerdings je nach Bodenverhältnissen nicht immer zu einer vollständigen Glättung führt und insbesondere Furchen kaum ausgleichen kann.

Andererseits ist es auch versucht worden, die von den Schrägscheiben aufgeworfenen Dämme bzw. gezogenen Furchen durch nachlaufende Zinkenstriegel zu glätten, vgl. beispielsweise EP 3 593 611 A1, EP 2 517 542 B1, EP 1 300 060 B1 oder DE 10 2010 054 946 A1.

Eine solche nachlaufende Folgewerkzeugreihe mit Zinkenstriegeln tut sich jedoch auch schwer, bei variierenden Bodenverhältnissen eine ausreichende Glättung zu erzielen, wenn die Striegelzinken ausreichend weit voneinander beabstandet sind bzw. auch von der vorauslaufenden Schrägscheibenreihe ausreichend beabstandet sind, um eine Verstopfungsgefahr zu vermeiden. Um eine möglichst vollständige Glättung von Dämmen und Furchen zu erzielen, wäre es an sich hilfreich, die Zinkenstriegel in geringem Abstand zueinander sowie sehr nahe an den vorauslaufenden Schrägscheiben anzuordnen, so dass die Zinkenstriegel größere Aufwerfungen von Erdreich sozusagen gleich an der Quelle eindämmen können. Allerdings ist bei dicht gesetzten Striegelzinken direkt heckseitig angrenzend an die Schrägscheiben das Problem zu beobachten, dass bei bestimmter Bodenbeschaffenheit bzw. Arbeitstiefe von den Schrägscheiben recht viel Erdreich aufgeworfen bzw. gewendet wird und sich insofern recht hohe Dämme bilden würden, die durch dicht gesetzte, nahe beabstandete Striegelzinken aufgestaut werden, so dass Verstopfungen erzeugt werden können.

Insofern sind diese bekannten Einebnungs-Ansätze mit Striegelzinken bislang auch nur bedingt erfolgreich.

Der vorliegenden Erfindung liegt die Aufgabe zugrunde, eine verbesserte Scheibenegge der genannten Art zu schaffen, die Nachteile des Standes der Technik vermeidet und letzteren in vorteilhafter Weise weiterbildet. Insbesondere soll eine über die Arbeitsbreite der Maschine gleichmäßige Bodenbearbeitung ohne Dämme und Furchen in Übergangsbereichen und gleichzeitig ein stabiles Nachlaufen der Maschine ohne Seitenzug erreicht werden, ohne dies durch einen sperrigen, raumgreifenden Maschinenaufbau und eine damit einhergehende Beeinträchtigung der Bodenanpassung zu erkaufen.

Erfindungsgemäß wird die genannte Aufgabe durch eine Scheibenegge gemäß Anspruch 1 gelöst. Bevorzugte Ausgestaltungen der Erfindung sind Gegenstand der abhängigen Ansprüche.

Es wird also vorgeschlagen, die Einebnungselemente in der Folgewerkzeugreihe, die der genannten zumindest einen oder zwei Bodenwerkzeugreihen nachläuft, nicht gleichmäßig dicht anzuordnen, sondern den Abstand zwischen den Einebnungselementen unterschiedlich zu wählen, um einerseits in den für Unebenheiten kritischen Fahrgassenbereichen eine ausreichende Glättung zu erreichen, andererseits aber die Gefahr von Verstopfungen an der Folgewerkzeugreihe einzudämmen. Erfindungsgemäß werden die Einebnungselemente über die Arbeitsbreite der Folgewerkzeugreihe ungleichmäßig verteilt angeordnet, wobei sich Einebnungselemente-Gruppen, die mehrere benachbarte, recht eng beieinanderstehende Einebnungselemente umfassen, mit Lücken, in denen die Folgewerkzeugreihe keine Einebnungselemente aufweist, abwechseln. Die genannten Einebnungselemente-Gruppen können recht eng angeordnete bzw. nur wenig beabstandete Einebnungselemente umfassen, um eine starke Glättungswirkung bzw. Einebnung von Dämmen und Furchen zu erreichen. Trotzdem droht keine Gefahr von Verstopfungen, da überschüssiges bzw. sich aufstauendes Erdreich über die Lücken in der Folgewerkzeugreihe abströmen kann. Durch geschicktes Abwechseln von Lücken und Einebnungselemente-Gruppen mit Einebnungselementen in engem Abstand zueinander bzw. geschickte Anordnung von Lücken und Einebnungselemente-Gruppen können zur Dammbildung neigende Fahrgassenbereiche ausreichend geglättet werden, ohne Gefahr zu laufen, dass die Folgewerkzeugreihe verstopft.

Insbesondere können die Lücken in Fahrgassenbereichen angeordnet sein, die benachbart zu Dammbildungsgassen liegen, in denen die Bodenwerkzeuge der vorauslaufenden Bodenwerkzeugreihe Erddämme aufwerfen, und/oder in Fahrgassenbereichen liegen, in denen typischerweise Furchen von den vorauslaufenden Bodenbearbeitungswerkzeugen hinterlassen werden, da in diesen Fahrgassenabschnitten keine bzw. keine größere Anzahl von Einebnungselementen für die Glättung benötigt werden. Gleichzeitig kann der sich einstellende Effekt, dass an den Einebnungselemente-Gruppen aufgestautes Erdreich über die benachbarten Lücken abströmen kann, dazu genutzt werden, die genannten Furchenbildungsgassen so zuzuschütten, wodurch eine weitere Steigerung der Glättung erreicht werden kann.

Die genannten Einebnungselemente-Gruppen selber können in den Fahrgassen angeordnet werden, in denen die vorauslaufenden Bodenbearbeitungswerkzeuge einen Damm aufwerfen bzw. zur Dammbildung neigen, um solche aufgeworfenen Dämme durch die nachlaufenden Einebnungselemente glätten zu können.

Die vorauslaufende zumindest eine Bodenwerkzeugreihe kann in Weiterbildung der Erfindung insbesondere zur Fahrtrichtung schräg angestellte Bodenbearbeitungswerkzeuge beispielsweise in Form von Schrägscheiben aufweisen, die infolge Ihrer Schrägstellung zur Fahrtrichtung eine der Fahrtrichtung zugewandte Frontseite sowie eine von der Fahrtrichtung abgewandte Heckseite besitzen. Bei einer solchen Schräganordnung der Bodenwerkzeuge kann es sinnvoll sein, die Einebnungselemente der nachlaufenden Folgewerkzeugreihe so auszubilden, dass die darin vorgesehenen Lücken in Fahrtrichtung unmittelbar hinter und/oder im Fahrspurschatten der Heckseite eines Bodenwerkzeugs der unmittelbar vorauslaufenden Bodenwerkzeugreihe angeordnet sind. Alternativ oder zusätzlich kann es sinnvoll sein, die Einebnungselemente-Gruppen mit vorzugsweise recht dicht aneinander sitzenden Einebnungselementen jeweils im Abwurf- bzw. Ablegebereich der Frontseite eines Bodenwerkzeugs der unmittelbar vorauslaufenden Bodenwerkzeugreihe anzuordnen.

Durch die Ausbildung der Folgewerkzeugreihe mit einander abwechselnden Lücken und Einebnungselemente-Gruppen wird es auch möglich, die Folgewerkzeugreihe sehr dicht an der vorauslaufenden Bodenwerkzeugreihe anzuordnen, ohne dass die Gefahr von Verstopfungen droht.

Insbesondere kann die Folgewerkzeugreihe so dicht an die vorauslaufende Bodenwerkzeugreihe gesetzt werden, dass die Lücken in der Folgewerkzeugreihe mit heckseitigen Endabschnitten der Bodenwerkzeuge der unmittelbar vorauslaufenden Bodenwerkzeugreihe überlappen bzw. die Bodenwerkzeuge der unmittelbar vorauslaufenden Bodenwerkzeugreihe sich mit ihren heckseitigen Endabschnitten jeweils in eine Lücke der Folgewerkzeugreihe hinein erstrecken. Betrachtet man die Bodenwerkzeug- und Folgewerkzeugreihen in einer Blickrichtung liegend quer zur Fahrtrichtung, können sich die heckseitigen Endabschnitte der Bodenwerkzeuge mit frontseitigen Endabschnitten der Einebnungselemente überlappen, was insbesondere durch die genannten Lücken in der Folgewerkzeugreihe ermöglicht wird, ohne dass eine Kollision zwischen Bodenwerkzeugen und nachlaufenden Einebnungselementen droht. Die Glättungswirkung der nachlaufenden Einebnungselemente kann durch eine solchermaßen große Nähe zu den Bodenwerkzeugen deutlich erhöht werden.

Die genannten Lücken können dabei eine Lückenbreite besitzen, die deutlich größer ist als der Abstand der in einer Einebnungselemente-Gruppe angeordneten Einebnungselemente voneinander. Die genannte Lückenbreite wird dabei von den jeweils äußersten Einebnungselementen zweier benachbarter Einebnungselemente-Gruppen definiert. Dieser Abstand bzw. die genannte Lückenbreite kann mehr als doppelt so groß sein wie der Werkzeugabstand innerhalb einer Einebnungselemente-Gruppe und kann auch mehr als dreimal so groß sein wie der Werkzeugabstand innerhalb einer Einebnungselemente-Gruppe. Sind beispielsweise Striegelzinken als Einebnungselemente vorgesehen, kann innerhalb einer Einebnungselemente-Gruppe der Abstand von Striegel zu Striegel beispielsweise 3-10 cm oder 5 - 10 cm betragen, wobei die Lücken eine Lückenbreite von 10-20 cm oder auch 15-30 cm haben können.

Betrachtet man das Verhältnis von Lücken zu Einebnungselemente-Gruppen über die gesamte Arbeitsbreite der Folgewerkzeugreihe, kann sich das besagte Verhältnis im Bereich von 30:70 bis 70:30 bewegen oder im Bereich von 40:60 bis 60:40 liegen. Insbesondere kann auch ein Verhältnis von näherungsweise etwa 50:50 vorgesehen sein.

Das genannte Verhältnis von Lückenbreite zu Einebnungselemente-Gruppen-Breite meint dabei das Verhältnis des Arbeitsbreitenanteils, der von den Lücken eingenommen wird, zu dem Arbeitsbreitenanteil, der von den Einebnungselemente-Gruppen insgesamt eingenommen wird. Es werden also die Lückenbreiten einerseits aufsummiert und die Breiten der Einebnungselemente-Gruppen andererseits aufsummiert und zueinander ins Verhältnis gesetzt, wobei das genannte Verhältnis wie gesagt beispielsweise näherungsweise etwa 1:1 betragen kann.

Nach einem weiteren Aspekt der vorliegenden Erfindung kann die Folgewerkzeugreihe in mehrere Sektionen unterteilt sein, wobei die einzelnen Sektionen der Folgewerkzeugreihe unterschiedlich ausgebildet sein können, um an verschiedene Boden- bzw. Bearbeitungsparameter über die Arbeitsbreite der Maschine jeweils optimal angepasst werden zu können. Insbesondere können die Einebnungselemente in den verschiedenen Sektionen der Folgewerkzeugreihe unterschiedlich ausgebildet sein und/oder unterschiedlich stark auf den Boden zu vorgespannt sein. Beispielsweise können die Einebnungselemente in einer Sektion eine größere Federhärte besitzen bzw. härter oder steifer ausgebildet sein als die Einebnungselemente in einer anderen Sektion. Alternativ oder zusätzlich können die Einebnungselemente in einer Sektion stärker auf den Boden zu vorgespannt sein als in einer anderen Sektion.

In Weiterbildung der Erfindung können insbesondere die Einebnungselemente in einer mittleren Sektion, die die Längsmittelebene der Bodenbearbeitungsmaschine umfasst, steifer oder federhärter ausgebildet sein und/oder stärker auf den Boden zu vorgespannt sein als die Einebnungselemente in seitlichen Sektionen der Folgewerkzeugreihe, die zu den Rändern der Arbeitsbreite hin liegen können. In diesen seitlichen Sektionen können die Einebnungselemente weicher ausgebildet sein bzw. weniger stark auf den Boden vorgespannt sein.

Einer solchen Konfiguration mit härteren und/oder stärker auf den Boden vorgespannten Einebnungselementen in der Mittelsektion liegt die Überlegung zugrunde, dass bei Bodenwerkzeugreihen in X-Anordnung oder auch in V-Anordnung regelmäßig zur Mitte der Arbeitsbreite hin eine stärkere Dammbildung auftritt. Gleichzeitig ist auch oft in den seitlichen Randbereichen der Maschine die Bodenaufstandskraft geringer, so dass durch dort weichere bzw. weniger stark vorgespannte Einebnungselemente eine bessere Glättung erreicht werden kann.

Besitzt die vorauslaufende Bodenwerkzeugreihe schräg zur Fahrtrichtung angestellte Bodenwerkzeuge, können die Einebnungselemente in Sektionen, die den Übergangsbereichen zwischen Schrägstellungen der vorauslaufenden Bodenwerkzeuge zu unterschiedlichen Seiten hin, stärker auf den Boden vorgespannt werden und/oder weniger weich ausgebildet werden, um die dort tendenziell größere Dammbildung besser glätten zu können.

Die Unterteilung in Sektionen kann auch dazu genutzt werden, die Folgewerkzeuge in Bereichen mit hoher Dammbildungs-Neigung näher an die vorauslaufenden Bodenwerkzeuge heranzurücken als in Bereichen mit geringerem Glättungsbedarf. Generell können die Sektionen in Fahrtrichtung versetzt zueinander angeordnet sein, um die Abstände zu den vorauslaufenden Bodenwerkzeugen verschieden zu gestalten, auch wenn die Bodenwerkzeugreihe ohne Fahrtrichtungsversatz ausgebildet ist, d.h. alle Bodenwerkzeuge der Reihe entlang einer Linie aufgereiht sind bzw. gleich weit vorne positioniert sind.

Insbesondere kann eine mittlere Sektion der Folgewerkzeugreihe weiter vorne positioniert sein als seitliche Sektionen und/oder näher an den vorauslaufenden Bodenwerkzeugreihen.

Die Sektionierung kann auch dazu genutzt werden, Seitenflügel bzw. -sektionen der Folgewerkzeugreihe aufklappbar auszubilden, um diese in eine Vorgewendestellung auszuheben oder in eine aufrechtstehende Transportstellung aufzuwippen.

In an sich per se bekannter Weise können die Bodenwerkzeuge der Bodenwerkzeugreihen und die Einebnungselemente der Folgewerkzeugreihe jeweils höheneinstellbar gelagert sein, um beispielsweise verschiedene Arbeitstiefen der Bodenwerkzeuge einstellen und die nachlaufenden Einebnungselemente daran anpassen zu können. Alternativ oder zusätzlich gestattet es eine solche Höhenverstellbarkeit der Bodenwerkzeuge einerseits und der Folgewerkzeuge andererseits die Höhenposition der Bodenwerkzeuge und der Folgewerkzeuge zueinander relativ zu verstellen, beispielsweise um bei verschiedenen Bodenbeschaffenheiten die Folgewerkzeuge in unterschiedlichen Höhen relativ zu den vorauslaufenden Bodenwerkzeugen fahren zu können.

Nach einem weiteren Aspekt der vorliegenden Erfindung kann eine Koppeleinrichtung zur Steuerung der Höhenverstellbewegung der Einebnungselemente in Abhängigkeit einer Höhenverstellbewegung der Bodenwerkzeuge der vorauslaufenden zumindest einen Bodenwerkzeugreihe vorgesehen sein. Eine solche Koppeleinrichtung kann insbesondere zwischen dem Werkzeugreihenträger der Folgewerkzeugreihe und dem Werkzeugreihenträger der vorauslaufenden Bodenwerkzeuge vorgesehen sein, um eine zumindest sektionsweise zentrale Verstellung der Höhenstellung der Folgewerkzeuge in Abhängigkeit der Höhenposition der vorauslaufenden Bodenwerkzeuge zu erreichen.

Beispielsweise können die Bodenwerkzeuge, ggf. über Werkzeugträger, an einem sich liegend quer zur Fahrtrichtung erstreckenden Werkzeugreihenträger aufgehängt sein, der um seine Längsachse schwenkbar gelagert sein kann, um durch Verschwenken des Werkzeugreihenträgers die Höhenstellung der Bodenwerkzeuge verstellen zu können. Alternativ oder zusätzlich können auch die Einebnungselemente der Folgewerkzeugreihe an einem um seine Längsachse schwenkbar gelagerten, sich liegend quer zur Fahrtrichtung erstreckenden Werkzeugreihenträger aufgehängt sein, ggf. über einen zwischengeschalteten Werkzeugträger oder auch direkt. Sind die Folgewerkzeuge und die vorauslaufenden Bodenwerkzeuge solchermaßen jeweils durch Verschwenken des Werkzeugreihenträgers höhenverstellbar, kann die vorgenannte Koppeleinrichtung eine Koppelstange umfassen, die einerseits an einem Kurbelabschnitt angelenkt ist, der drehfest an dem Werkzeugreihenträger der vorauslaufenden Bodenwerkzeugreihe befestigt ist, und andererseits an einem Kurbelabschnitt angelenkt sein, der drehfest mit dem Werkzeugreihenträger der Folgewerkzeugreihe verbunden ist. Dementsprechend kann die Koppelstange eine Verdrehung des Werkzeugreihenträgers der Bodenwerkzeuge in eine Verdrehung des Werkzeugreihenträgers der Folgewerkzeugreihe umsetzen, so dass eine Kopplung der Höhenverstellbewegungen erreicht wird.

Die Koppeleinrichtung kann dabei vorteilhafterweise derart ausgebildet sein, dass die Höhenverstellbewegungen in die gleiche Richtung erfolgen. Werden also die Bodenwerkzeuge weiter nach oben verstellt, sieht die Koppeleinrichtung auch eine Höhenbewegung der Folgewerkzeuge nach oben vor.

Die genannte Koppelstrebe kann in vorteilhafter Weiterbildung der Erfindung ein Federbein umfassen bzw. eine Federeinrichtung aufweisen, so dass die Koppeleinrichtung gleichzeitig zur Vorspannung der Einebnungselemente dienen kann.

Unabhängig von einer solchen Ausbildung der Koppelstrebe als Federbein kann in Weiterbildung der Erfindung eine Vorspanneinrichtung zum Vorspannen der Einebnungselemente mit einer verstellbaren Vorspannkraft auf den Boden zu vorgesehen sein.

Nach einem weiteren Aspekt der vorliegenden Erfindung ist dabei eine Steuervorrichtung zum veränderlichen Steuern der Vorspannkraft einer solchen Vorspanneinrichtung in Abhängigkeit verschiedener Boden- und Betriebsparameter vorgesehen.

Insbesondere kann die Steuervorrichtung dazu ausgebildet sein, die Vorspannkraft der Vorspanneinrichtung unter Berücksichtigung eines Bodenparameters, der ein Aufwurfbild vor den Einebnungselementen und/oder ein Einebnungsbild hinter den Einebnungselementen charakterisiert, sowie ferner in Abhängigkeit zumindest eines weiteren Betriebsparameters aus der Parametergruppe Fahrgeschwindigkeit, Arbeitstiefe und Bodenhärte zu steuern.

Die Berücksichtigung mehrerer Boden- und Betriebsparameter gleichzeitig kann eine feinere und an komplexere Bedingungen besser anpassbare Steuerung der Vorspannkraft erreichen, um eine insgesamt bessere Glättung von Dämmen und Furchen zu erreichen.

Insbesondere kann die Steuervorrichtung dazu ausgebildet sein, die Vorspannung der Einebnungselemente bei stärkerer Dammbildung und/oder stärkerer Furchenbildung zu erhöhen, um eine stärkere Glättung zu erreichen. Alternativ oder zusätzlich kann die Steuervorrichtung die Vorspannung auch erhöhen, wenn die Fahrgeschwindigkeit erhöht wird und/oder eine größere Arbeitstiefe gefahren wird und/oder die Bodenhärte größer wird.

Vorzugsweise kann die Steuervorrichtung dabei dazu ausgebildet sein, die Vorspannung vergleichsweise stärker zu erhöhen, wenn sich sowohl die Dammbildung und/oder Furchenbildung verstärkt und gleichzeitig auch eine Erhöhung der Fahrgeschwindigkeit und/oder Arbeitstiefe und/oder Bodenhärte eintritt bzw. erfasst wird, als wenn nur einer dieser Verstärkungseffekte auftritt, d.h. sich nur die Damm- oder Furchenbildung erhöht oder sich nur die Fahrgeschwindigkeit, Arbeitstiefe und/oder Bodenhärte erhöht.

Zur Erfassung der genannten Parameter kann eine geeignete Sensorik vorgesehen sein, beispielsweise in Form einer bildgebenden Sensorik und/oder einer Ultraschallsensorik zur Erfassung der Dammbildung und Furchenbildung. Zur Bestimmung der Fahrgeschwindigkeit und/oder Arbeitstiefe kann die Sensorik beispielsweise ein Signal vom Schlepper abgreifen, in Abhängigkeit dessen dann die Vorspannkraft verstellt werden kann, wobei aber auch vom Schlepper separate Fahrgeschwindigkeits- und Arbeitstiefensensoren vorgesehen sein können. Die Bodenhärte kann beispielsweise durch einen Bodenhärtensensor vor Ort erfasst werden oder auch aus einer Kartierung ausgelesen werden.

Zusätzlich zu der genannten Folgewerkzeugreihe kann zur weiteren Verbesserung der Glättung bzw. Vermeidung von Erd-Dämmen im Übergangsbereich zwischen gegenläufig angestellten Schrägscheiben- bzw. Bodenwerkzeug-Gruppen der vorauslaufenden, zumindest einen Bodenwerkzeugreihe eine weitere Bodenbearbeitungsscheibe angeordnet werden, die den zwischen den Schrägscheiben-Gruppen verbleibenden Bodenstreifen vergleichmäßigend bearbeitet und keine weiteren Wälle zu einer Seite hin aufwirft. Insbesondere kann zumindest eine der Bodenwerkzeugreihen mittig zwischen den schräg angestellten Schrägscheiben- bzw. Schrägwerkzeug-Gruppen eine Wellsechscheibe angeordnet werden. Eine solche Wellsechscheibe kann nicht nur platzsparend in dem beengten Zwischenraum zwischen zwei benachbarten, zueinander gegenläufig angestellten Schrägscheiben untergebracht werden, sondern sie ermöglicht durch ihre reliefartige Flankenkonturierung auch eine vergleichmäßigende Bodenbearbeitung des sozusagen übriggebliebenen Streifens zu beiden Seiten hin, ohne erneut Furchen zu ziehen oder Wälle aufzuwerfen. Die nachlaufenden Einebnungselemente tun sich dann leichter, den Boden möglichst vollständig zu glätten.

Eine solche Wellsechscheibe kann insbesondere in eine der Lücken der Folgewerkzeugreihe hineinragend angeordnet sein bzw. fluchtend mit der Fahrgasse einer der Lücken in der Folgewerkzeugreihe angeordnet sein.

Insbesondere kann die genannte Wellsechscheibe mittig zwischen den gegenläufig angestellten Bodenwerkzeuggruppen selbst im Wesentlichen fahrtrichtungsparallel angestellt sein, sodass die Wellsechscheibe weder Seitenzug nach links noch Seitenzug nach rechts verursacht. Durch die zumindest näherungsweise fahrtrichtungsparallele Ausrichtung der Wellsechscheibe kann diese auch den beengten Zwischenraum zwischen den gegenläufig angestellten Schrägscheibengruppen gut nutzen, ohne selbst eine Kollisionsproblematik zu verursachen.

In vorteilhafter Weiterbildung der Erfindung ist die genannte Wellsechscheibe in Fahrtrichtung etwa auf Höhe der benachbarten Schrägscheiben positioniert. Während die mittig angeordnete Wellsechscheibe sich in Fahrtrichtung im Wesentlichen ohne Versatz zu den benachbarten Schrägscheiben in die Bodenwerkzeugreihe einfügt, kann die Wellsechscheibe je nach Scheibendurchmesser ggf. mit ihrer Scheibenachse einen gewissen Höhenversatz nach oben oder unten gegenüber den Scheibenachsen der benachbarten Schrägscheiben haben.

Die Wellsechscheibe kann aber auch im Wesentlichen ohne einen solchen Höhenversatz zu den benachbarten Schrägscheiben in die Bodenwerkzeugreihe eingefügt sein. Insbesondere können die mittige Wellsechscheibe und die benachbarten Schrägscheiben mit ihren Scheibenmittelpunkten auf einer gemeinsamen Querachse angeordnet sein, die durch die genannten Scheibenmittelpunkte geht. Da die benachbarten Schrägscheiben mit ihren Scheibenachsen verkippt angeordnet sind, ist die genannte gemeinsame Querachse keine gemeinsame tatsächliche Drehachse der Scheiben. Nichtsdestotrotz können die Schrägscheibengruppen mit ihren Scheibenmittelpunkten in etwa auf einer gemeinsamen, gedachten Achse aufgereiht sein, auf der dann auch die hinzukommende, mittige Wellsechscheibe angeordnet sein kann.

Durch die Eingliederung der Wellsechscheibe in die jeweilige Bodenwerkzeugreihe im Wesentlichen ohne Versatz in Fahrtrichtung zu den Nachbarscheiben wird vorteilhafterweise kein zusätzlicher Bauraum für die Wellsechscheibe benötigt. Dennoch kann der Boden über die gesamte Arbeitsbreite der Bodenwerkzeugreihe homogen und gleichmäßig bearbeitet werden. Zusätzlich können die Bodenwerkzeugreihen in Fahrtrichtung betrachtet sehr nahe aneinander angeordnet werden, sodass eine hervorragende Bodenanpassung erreicht wird, insbesondere auch wenn quer verlaufende Bodenwellen überfahren werden.

Die Wellsechscheibe kann grundsätzlich in verschiedener Art und Weise konturiert sein. Vorteilhafterweise besitzt die Wellsechscheibe eine beidseitig lockernde und/oder symmetrisch werfende Reliefstruktur, die zu gegenüberliegenden Seiten hin ballige und/oder eingedellte Konturabschnitte besitzen kann. Insbesondere können die gegenüberliegenden Flanken bzw. Flachseiten der Wellsechscheibe jeweils mit einer Reliefstruktur versehen sein, wobei die gegenüberliegenden Reliefstrukturen im Wesentlichen gleich bzw. komplementär zueinander ausgebildet sein können, sodass die Wellsechscheibe zu gegenüberliegenden Seiten hin gleichermaßen den Boden lockert.

Insbesondere kann die Wellsechscheibe an ihren Flachseiten bzw. Flanken ein in Umfangsrichtung mäanderndes Wellenprofil besitzen. Beispielsweise können vom Scheibenmittelpunkt ausgehend strahlenförmig Wellen und Senken vorgesehen sein, wobei sich solche Wellen und Senken nicht über den gesamten Radius oder Durchmesser der Scheibe erstrecken müssen - was sie gleichwohl können. Beispielsweise kann es auch ausreichend sein, einen äußeren Umfangskranz der Scheibe gewellt oder in anderer Weise reliefartig konturiert auszubilden.

Die Erfindung wird nachfolgend anhand eines bevorzugten Ausführungsbeispiels und zugehörigen Zeichnungen näher erläutert. In den Zeichnungen zeigen:
- Fig. 1:: eine perspektivische Frontansicht einer Bodenbearbeitungsmaschine in Form einer Scheibeneggen-Sämaschinen-Kombination,

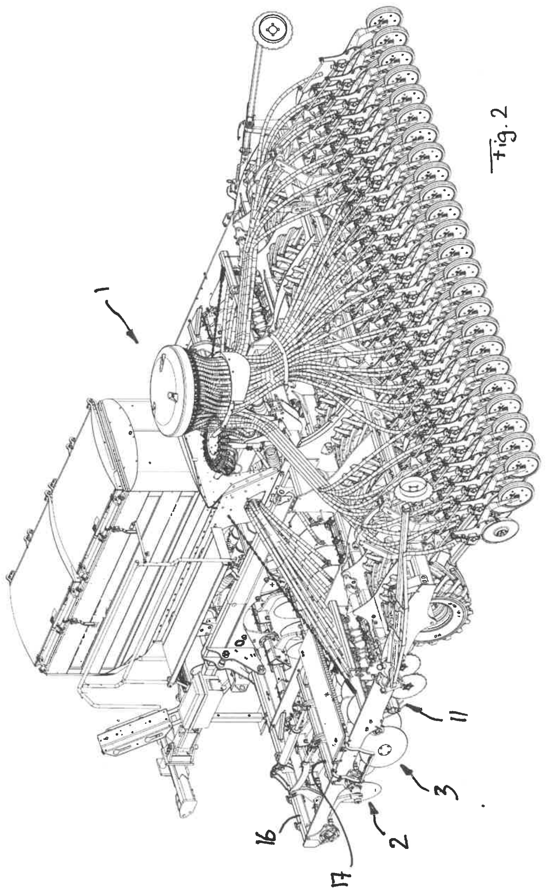

- Fig. 2:: eine perspektivische Rückansicht der Bodenbearbeitungsmaschine aus Fig. 1,
- Fig. 3:: eine Seitenansicht der Bodenbearbeitungsmaschine aus Fig. 1, die die Anordnung der zwei vorauslaufenden Bodenwerkzeugreihen und der nachlaufenden Folgewerkzeugreihe zeigt,

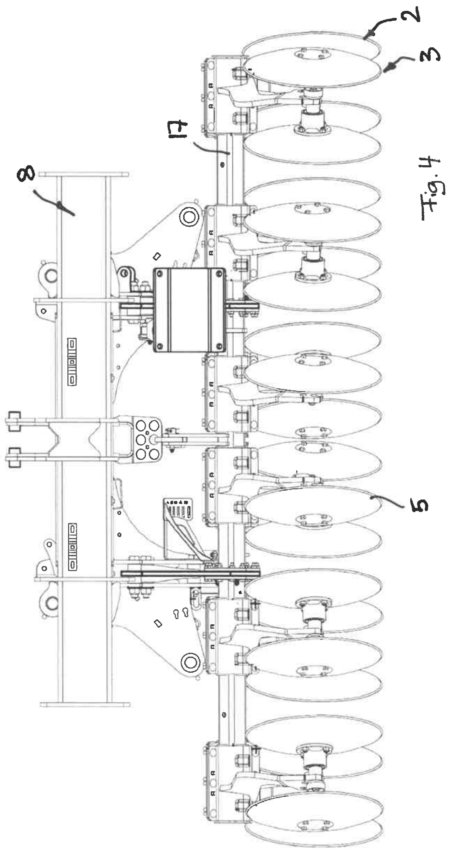

- Fig. 4:: eine Heckansicht der Bodenbearbeitungswerkzeugreihen der Bodenbearbeitungsmaschine aus den vorhergehenden Figuren, die die Schrägstellung der Bodenwerkzeuge in Form der Schrägscheiben zeigt,
- Fig. 5:: eine Draufsicht auf die beiden vorauslaufenden Bodenwerkzeugreihen und deren schräg zur Fahrtrichtung angestellten Schrägscheiben sowie der Folgewerkzeugreihe, die als Einebnungselemente Striegelzinken umfasst,

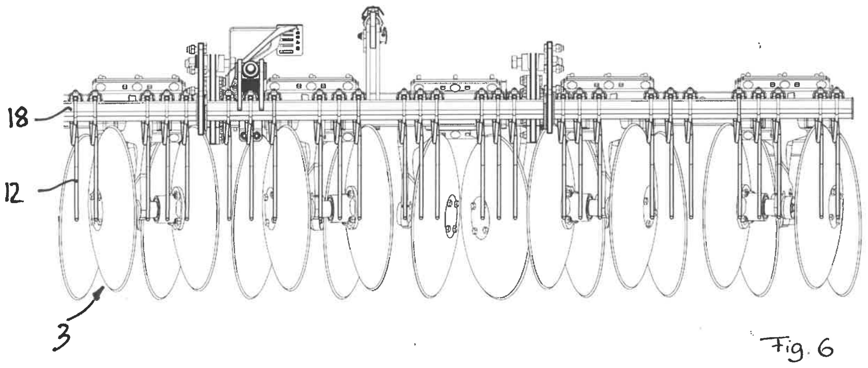

- Fig. 6:: eine heckseitige Ansicht der Folgewerkzeugreihe mit den Striegelzinken und den vorauslaufenden Schrägscheibenreihen,
- Fig. 7:: eine Draufsicht auf die vorauslaufende Bodenwerkzeugreihe und die nachlaufende Folgewerkzeugreihe ähnlich Fig. 5, wobei die Einebnungselemente der Folgewerkzeugreihe noch näher an der vorauslaufenden Bodenwerkzeugreihe und noch stärker mit deren Schrägscheiben überlappend angeordnet ist,
- Fig. 8:: eine Detailansicht der Überlappung der heckseitigen Endabschnitte der Schrägscheiben der vorauslaufenden Bodenwerkzeugreihe mit den nachlaufenden Einebnungselementen der Folgewerkzeugreihe, die das Eingreifen der Schrägscheiben in die Lücken der Folgewerkzeugreihe zeigt,
- Fig. 9:: eine Draufsicht auf die vorauslaufenden Bodenwerkzeugreihen und die nachlaufende Folgewerkzeugreihe ähnlich Fig. 5, wobei im zentralen, zusammenlaufenden Bereich der zweiten Schrägscheibenreihe eine Wellscheibe angeordnet ist,
- Fig. 10:: eine ausschnittsweise, vergrößerte Darstellung der Folgewerkzeugreihe und der vorauslaufenden Bodenwerkzeugreihe, die die Überlappung der zentralen Wellscheibe mit einer Lücke der Folgewerkzeugreihe zeigt,
- Fig. 11:: eine Seitenansicht der beiden vorauslaufenden Bodenwerkzeugreihen und der nachlaufenden Folgewerkzeugreihe mit der dazwischen vorgesehenen Koppeleinrichtung zum Anpassen der Höhenstellungen der vorauslaufenden Bodenwerkzeuge und der nachlaufenden Einebnungselemente, wobei die genannte Koppeleinrichtung eine Vorspannvorrichtung in Form eines Federbeins zum Vorspannen der Einebnungselemente zum Boden hin aufweist,
- Fig. 12:: eine ausschnittsweise, vergrößerte Darstellung der Koppeleinrichtung zwischen den Einebnungselementen und den vorauslaufenden Bodenwerkzeugen, wobei die elastische Nachgiebigkeit der Einebnungselemente dargestellt ist,
- Fig. 13:: eine Seitenansicht der Folgewerkzeugreihe und der vorauslaufenden Bodenwerkzeugreihe ähnlich Fig. 12, wobei die Ansicht eine geteilte Ausführung der Folgewerkzeugreihe mit mehreren zueinander in Fahrtrichtung versetzten Sektionen zeigt,
- Fig. 14:: eine Seitenansicht der Bodenwerkzeugreihen und der Folgewerkzeugreihe, die eine vergleichsweise tiefe Höheneinstellung der Bodenwerkzeuge und der nachlaufenden Einebnungselemente zeigt,
- Fig. 15:: eine Seitenansicht der Bodenwerkzeugreihen und der Folgewerkzeugreihe ähnlich Fig. 14, wobei jedoch eine angehobene Höhenstellung der Bodenwerkzeuge und die damit einhergehende Höhenstellung der Einebnungselemente gezeigt ist,
- Fig. 16:: eine Seitenansicht der Bodenwerkzeugreihen und der Folgewerkzeugreihe in einer mittleren Höhenstellung, wobei die mit der Vorspannvorrichtung für die Einebnungselemente gekoppelte Steuervorrichtung dargestellt ist,

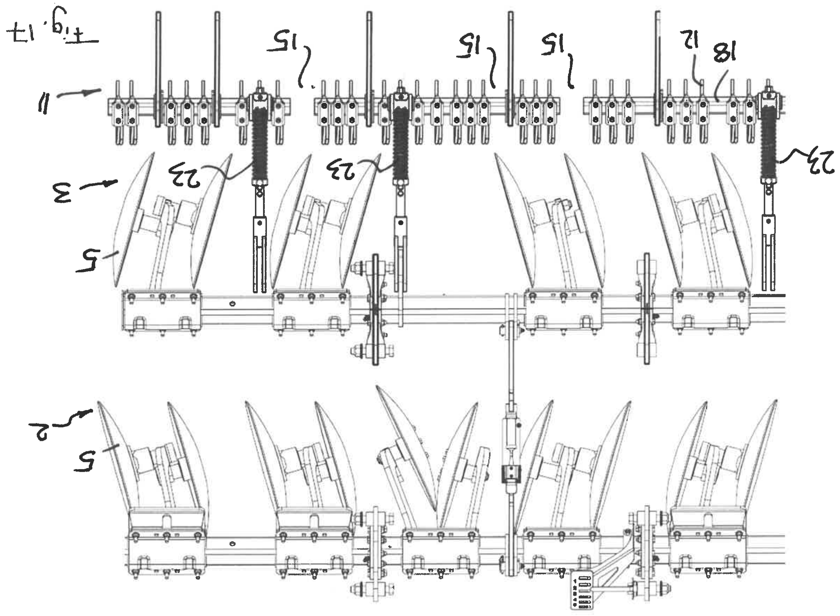

- Fig. 17:: eine Draufsicht auf die vorauslaufenden Bodenwerkzeugreihen und die nachlaufende Folgewerkzeugreihe, die bei der Ausführung nach Fig. 17 in mehrere Sektionen unterteilt ausgebildet ist, wobei die genannten Sektionen jeweils einzeln durch eine Vorspannvorrichtung in Form eines Federbeins vorgespannt werden können,
- Fig. 18:: eine Draufsicht auf die Bodenwerkzeugreihen und die Folgewerkzeugreihe ähnlich Fig. 17, wobei die hier ebenfalls in Sektionen unterteilte Folgewerkzeugreihe in Fahrtrichtung versetzt angeordnete Sektionen besitzt,

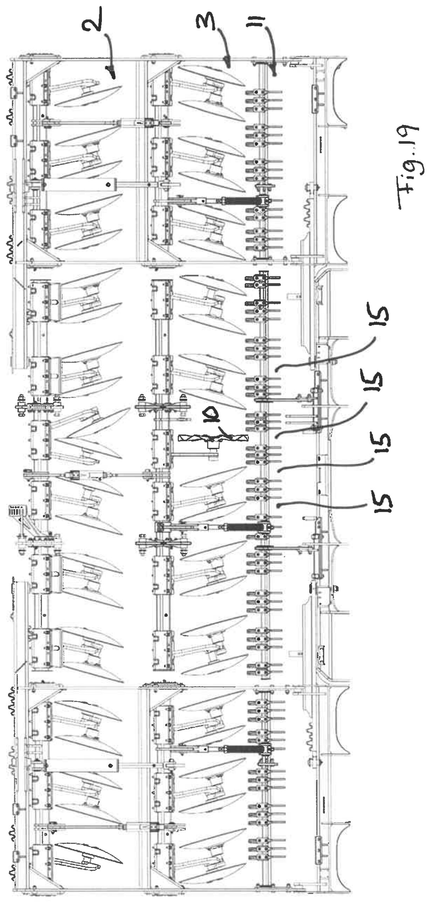

- Fig. 19:: eine Draufsicht auf die Bodenwerkzeugreihen und die Folgewerkzeugreihe, wobei die Bodenwerkzeugreihe und die Folgewerkzeugreihe jeweils zwei separate seitliche Sektionen aufweist, die jeweils einen gemeinsamen, höhenverstellbaren Seitenflügel der Bodenbearbeitungsmaschine bilden, und
- Fig. 20:: eine heckseitige Ansicht zweier Bodenwerkzeugreihen mit Schrägscheiben, die die Bildung eines Damms und mehrerer Furchen zeigt, wie sie sich ohne Folgewerkzeugreihe einstellen würden.

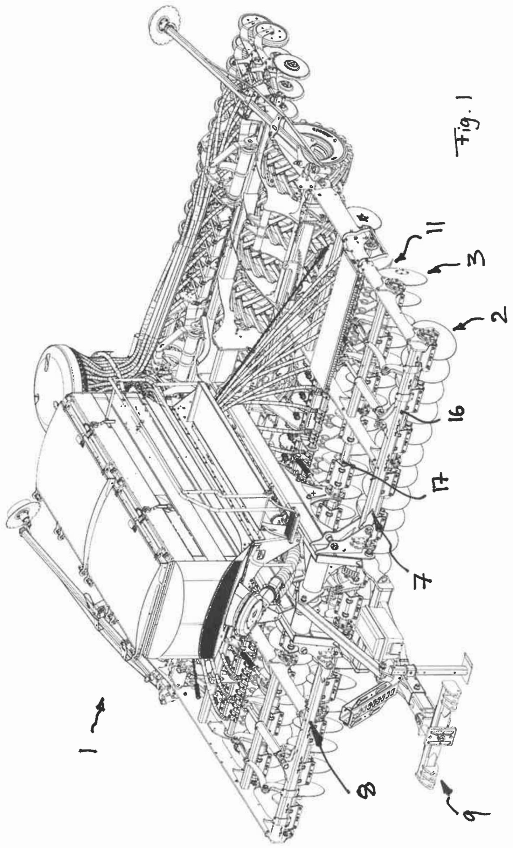

Wie Figur 1 zeigt, kann die Bodenbearbeitungsmaschine 1 zwei hintereinanderlaufende Bodenwerkzeugreihen 2, 3 umfassen, die sich jeweils quer zur Fahrtrichtung 4 erstrecken und jeweils eine Vielzahl an nebeneinander angeordneten Schrägscheiben 5 umfassen können, die die Bodenbearbeitungswerkzeuge bilden und den Boden bearbeiten.

Die genannten Schrägscheiben 5 können dabei einzeln oder paarweise an einem Tragarm 6 drehbar gelagert sein, der die Scheibe bzw. die mehreren zusammengefassten Scheiben jeweils an einem Querträger 7 des Maschinenrahmens 8 abstützt.

In an sich bekannter Weise können die genannten Tragarme 6 an den genannten Querträgern 7 rotatorisch nachgiebig, vorzugsweise aber vorgespannt gelagert sein, beispielsweise mittels per se bekannter Gummiquetschlager, sodass die an den Tragarmen 6 gelagerten Schrägscheiben 5 bei Auffahren auf Hindernisse ggf. nach oben ein Stück weit ausweichen, andererseits aber vom Gewicht der Maschine bzw. auch vom Schlepper her gegen den Boden gedrückt werden können. Die genannten Tragarme 6 können sich beispielsweise von den Querträgern 7 schräg nach hinten und unten erstrecken, vgl. Figur 1.

Ohne dass dies in den Figuren gezeigt ist, können die Querträger 7 ggf. klappbar ausgebildet sein, um die Maschinenbreite für den Straßentransport reduzieren zu können.

Die Bodenbearbeitungsmaschine 1 kann als Anbaugerät zum Anbau an einen nicht gezeigten Schlepper ausgebildet sein, wobei der Maschinenrahmen 8 beispielsweise über einen Anbaubock 9 über eine Dreipunktanlenkung mit Ober- und Unterlenkern oder auch durch eine andere Anbauvorrichtung am Schlepper befestigt werden kann.

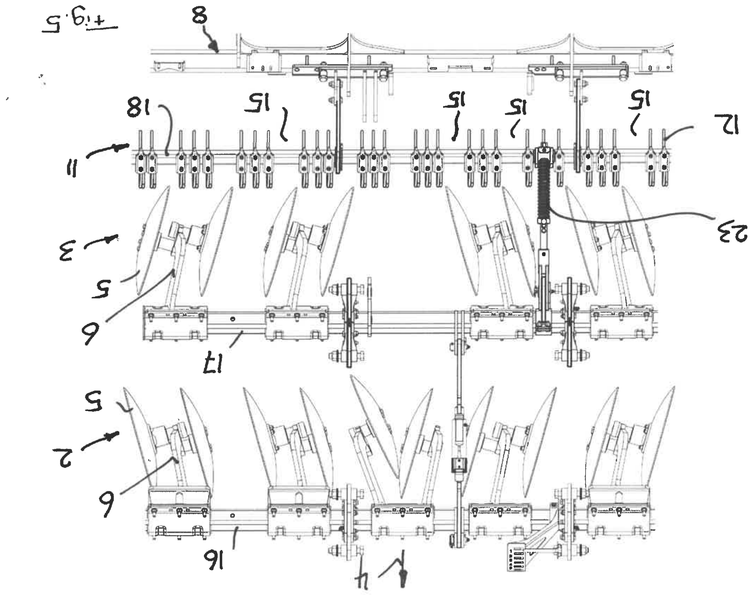

Wie Figur 5 zeigt, kann jede Bodenwerkzeugreihe 2 und 3 in zueinander gegenläufig schräg zur Fahrtrichtung angestellte Schrägscheibengruppen unterteilt sein, wobei die Bodenwerkzeugreihen 2 und 3 jeweils mittig in solche gegenläufig angestellten Schrägscheibengruppen unterteilt sein kann.

Die Schrägscheiben 5 in einer rechten Hälfte einer jeden Bodenwerkzeugreihe 2, 3 kann bezüglich der Fahrtrichtung zu einer Seite hin schräg angestellt sein, während die Schrägscheiben 5 in der linken Hälfte der Bodenwerkzeugreihe bezüglich der Fahrtrichtung zur gegenüberliegenden Seite hin schräg angestellt sind.

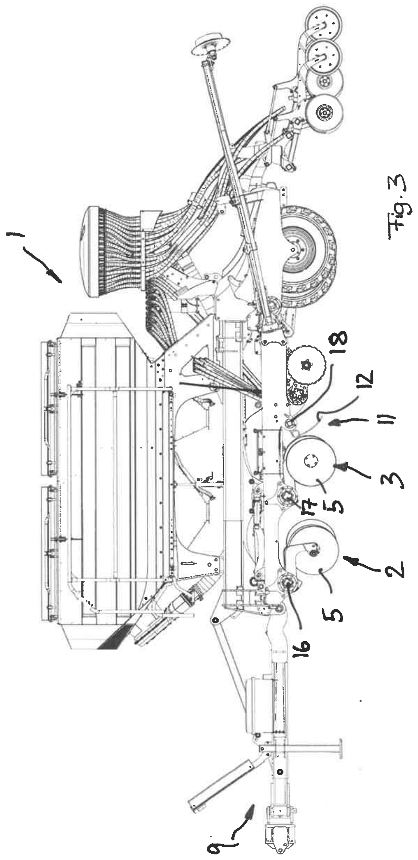

Ferner können die Schrägscheiben 5 auch von Bodenwerkzeugreihe zu Bodenwerkzeugreihe gegenläufig schräg angestellt sein, insbesondere derart, dass einander nachlaufende Schrägscheibengruppen bezüglich der Fahrtrichtung gegenläufig schräg angestellt sind. Wie Figur 3 zeigt, können beispielsweise die Schrägscheiben 5 einer linken Hälfte der vorauslaufenden Bodenwerkzeugreihe 2 zur Fahrtrichtung nach rechts verkippt sein, während die Schrägscheiben 5 in der besagten linken Hälfte der hinteren Bodenwerkzeugreihe 3 nach links verkippt sein können. In der rechten Werkzeughälfte der Werkzeugreihen 2, 3 ist eine dazu spiegelbildliche Verkippung vorgesehen.

Mit anderen Worten können die Schrägscheiben 5 einer Werkzeugreihe nach au-βenwerfend angeordnet sein, während die Schrägscheiben 5 der anderen Werkzeugreihe nach innenwerfend angeordnet sein können. Wie die Figuren 5, 7 und 9 zeigen, kann beispielsweise die vorauslaufende Bodenwerkzeugreihe 2 nach au-ßenwerfende Schrägscheiben 5 umfassen, während die nachlaufende Bodenwerkzeuge 3 nach innenwerfende Schrägscheiben umfasst.

Die beiden Bodenwerkzeugreihen 2 und 3 sind dabei mittig geteilt und die Schrägscheiben 5 einer jeden Werkzeugreihe 2 und 3 sind zueinander spiegelbildlich bzw. symmetrisch bezüglich einer Längsmittelebene schräg angestellt, sodass sich der Schrägzug der Scheiben innerhalb einer jeden Reihe kompensiert.

Ferner umfasst die Bodenbearbeitungsmaschine 1 zumindest eine Folgewerkzeugreihe 11, die der zumindest einen Bodenwerkzeugreihe 2, 3 nachläuft und nebeneinander angeordnete Einebnungselemente 12 zum Einebnen von durch die Bodenwerkzeuge hinterlassenen Bodenunebenheiten wie Furchen 14 und/oder Dämmen 13 aufweist.

Wie die Figuren zeigen, sind die Einebnungselemente 12 dabei über die Arbeitsbreite der Folgewerkzeugreihe 11 ungleichmäßig verteilt angeordnet, wobei sich Einebnungselemente-Gruppen, die mehrere benachbarte Einebnungselemente 12 umfassen, mit Lücken 15, in denen die Folgewerkzeugreihe 11 keine Einebnungselemente 12 aufweist, abwechseln, vgl. Fig. 5, 7, 8, 9 und 10.

In Weiterbildung der Erfindung können die Lücken 15 in Fahrgassen benachbart zu Dammbildungsgassen, in denen die Bodenwerkzeuge 5 der vorauslaufenden Bodenwerkzeugreihe 3 Erd-Dämme 13 aufwerfen, und/oder in Furchenbildungsgassen, in denen die Bodenwerkzeuge 5 der vorauslaufenden Bodenwerkzeugreihe 3 Furchen 14 hinterlassen, angeordnet sind, vgl. Fig. 5, 7, 8, 9 und 10.

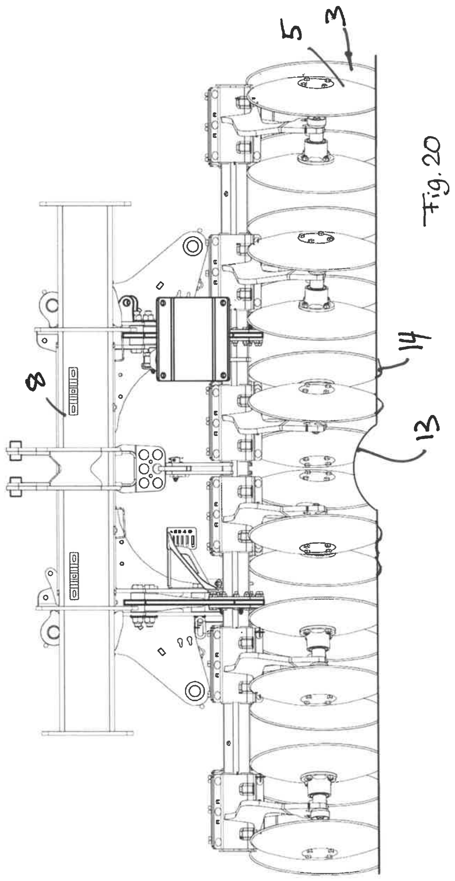

Die genannten Dämme 13 und Furchen 14, die sich ohne die Einebnungselemente 12 der Folgewerkzeugreihe 11 aufwerfen bzw. bilden würden, sind in Fig. 20 dargestellt. Insbesondere bilden sich Dämme 13 dort, wo benachbarte Schrägscheiben 5 Erdreich "zusammenwerfen", während sich Furchen 14 im heckseitigen Fahrschatten der Schrägscheiben bilden können, vgl. Fig. 20.

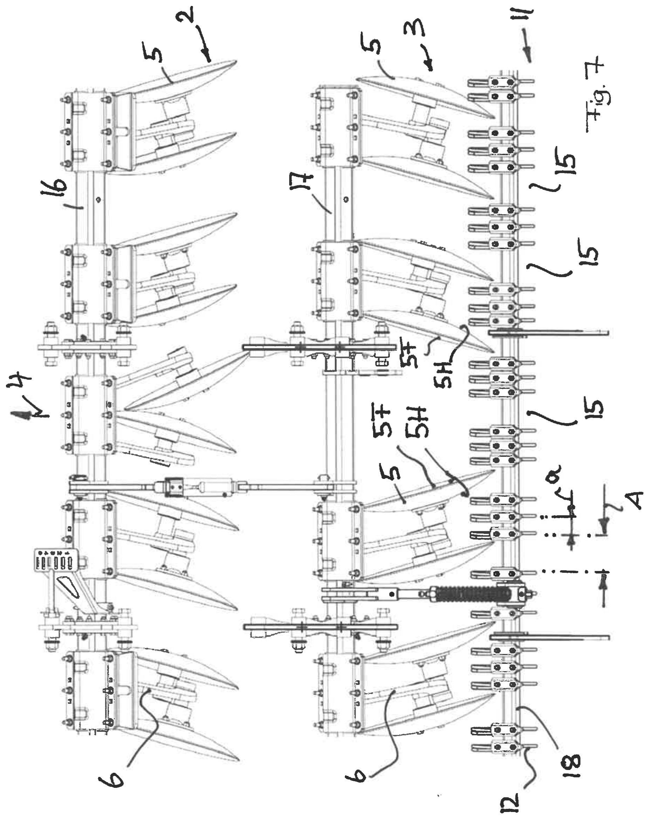

Wie die Figuren 7, 8 und 10 zeigen, kann vorteilhafterweise vorgesehen sein, dass die der Folgewerkzeugreihe vorauslaufende Bodenwerkzeugreihe 3 zur Fahrtrichtung schräg angestellte Bodenwerkzeuge 5, insbesondere in Form von Schrägscheiben, aufweist, die eine der Fahrtrichtung 4 zugewandte Frontseite 5F sowie eine von der Fahrtrichtung 4 abgewandte Heckseite 5H besitzen, wobei die genannten Lücken 15 in der Folgewerkzeugreihe 11 jeweils in Fahrtrichtung 4 unmittelbar hinter und/oder im Fahrspurschatten der Heckseite 5H eines Bodenwerkzeugs 5 der unmittelbar vorauslaufenden Bodenwerkzeugreihe 3 angeordnet sind und die Einebnungselemente-Gruppen jeweils in einem Abwurf- und/oder Ablegebereich der Frontseite 5F eines Bodenwerkzeugs 5 der unmittelbar vorauslaufenden Bodenwerkzeugreihe 3 angeordnet sind, vgl. Fig. 7, 8 und 10.

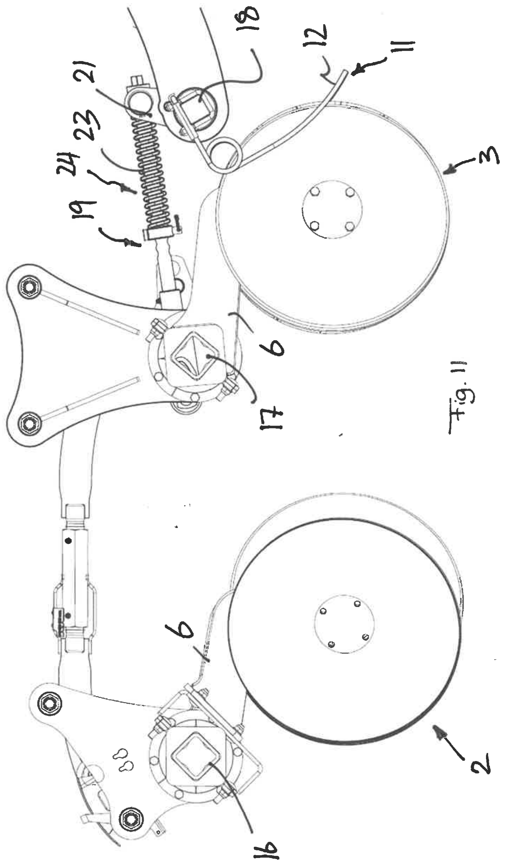

Unabhängig hiervon kann vorteilhafterweise vorgesehen sein, dass die Lücken 15 in der Folgewerkzeugreihe 11 mit heckseitigen Endabschnitten der Bodenwerkzeuge 5 der unmittelbar vorauslaufenden Bodenwerkzeugreihe 3 überlappen und die Bodenwerkzeuge 5 der unmittelbar vorauslaufenden Bodenwerkzeuge 3 sich mit ihren heckseitigen Endabschnitten jeweils in eine Lücke 15 der Folgewerkzeugreihe 11 hinein erstrecken, so dass quer zur Fahrtrichtung 4 betrachtet sich die heckseitigen Endabschnitte der Bodenwerkzeuge 5 mit frontseitigen Endabschnitten der Einebnungselemente 12 überlappen, vgl. Fig. 11.

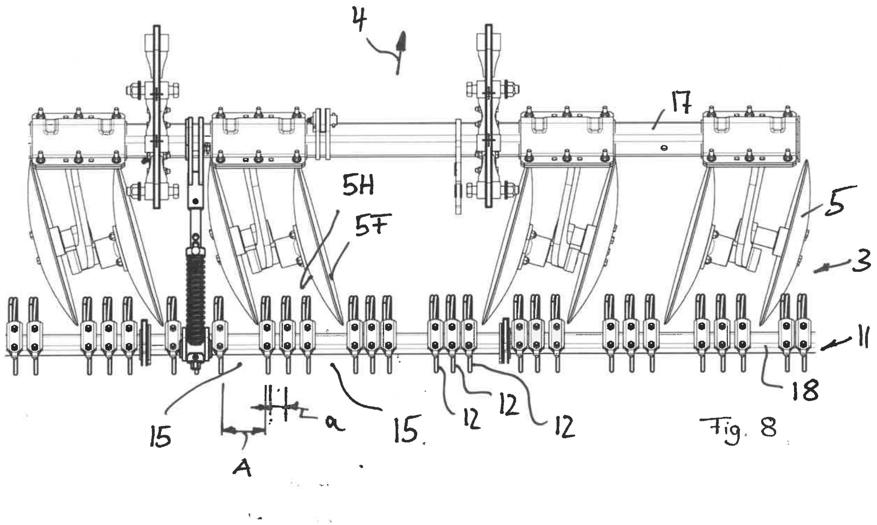

Wie die Figuren 7 und 8 zeigen, kann vorteilhafterweise vorgesehen sein, dass die Lücken 15 der Folgewerkzeugreihe 11 eine Lückenbreite A besitzen, die mindestens doppelt so groß ist wie ein Werkzeugabstand a zwischen zueinander benachbarten Einebnungselementen 12 innerhalb einer Einebnungselemente-Gruppe.

Insbesondere kann vorteilhafterweise vorgesehen sein, dass über die gesamte Arbeitsbreite der Folgewerkzeugreihe 11 ein Verhältnis des von den Lücken 15 eingenommenen Arbeitsbreitenanteils zu dem von den Einebnungselemente-Gruppen eingenommenen Arbeitsbreitenanteil im Bereich von 30:70 bis 70:30 oder 40:60 bis 60:40 beträgt, insbesondere bei etwa 50:50 liegt.

Wie die Figuren zeigen, kann vorteilhafterweise vorgesehen sein, dass die Einebnungselemente 12 der Folgewerkzeugreihe 11 als Zinkenstriegel umfassend zumindest einen Federzinken ausgebildet sind.

Dabei können die Federzinken der Einebnungselemente 12 der Folgewerkzeugreihe 11 bei Betrachtung in einer Richtung liegend quer zur Fahrtrichtung 4 zumindest teilweise mit den Bodenbearbeitungswerkzeugen 5 der unmittelbar vorauslaufenden Bodenwerkzeugreihe 3 überlappen, vgl. Fig. 11.

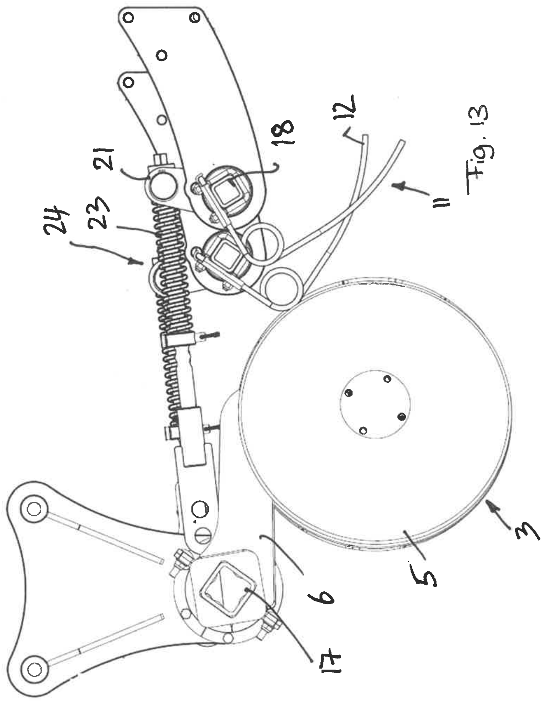

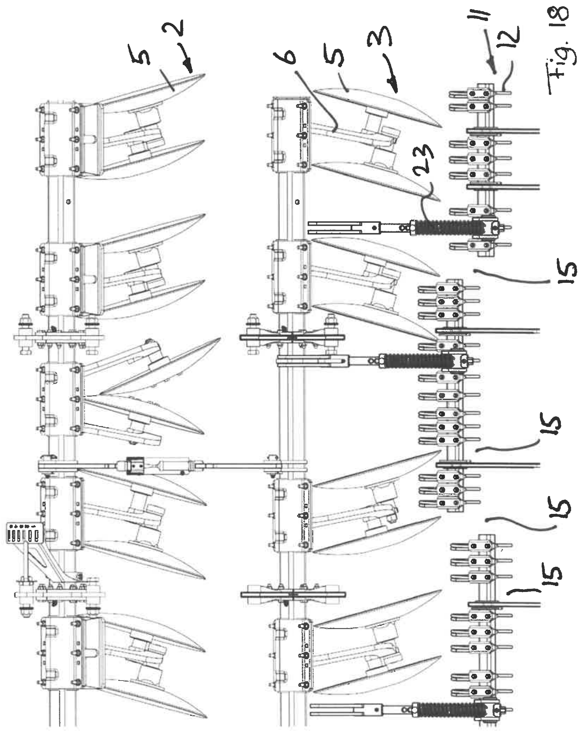

Alternativ oder zusätzlich kann nach einem weiteren vorteilhaften Aspekt vorgesehen sein, dass die Folgewerkzeugreihe 11 über die Arbeitsbreite der Bodenbearbeitungsmaschine in verschiedene Sektionen 11A-C unterteilt ist, vgl. Fig. 18 und auch Fig. 13, wobei die Einebnungselemente 12 in den verschiedenen Sektionen 11A-C unterschiedlich steif ausgebildet sein können und/oder unterschiedlich stark auf den Boden zu vorgespannt sein können.

Insbesondere können die in einer mittleren Sektion 11B der Folgewerkzeugreihe 11 vorgesehenen Einebnungselemente 12 eine größere Federhärte und/oder eine größere Steifigkeit und/oder eine stärkere Vorspannung auf den Boden zu besitzen als die Einebnungselemente 12 in einer oder jeder seitlichen Sektion 11A, 11C der Folgewerkzeugreihe 11, die zu seitlichen Randabschnitten der Arbeitsbreite der Bodenbearbeitungsmaschine angeordnet sind.

Besitzt die zumindest eine vorauslaufende Bodenwerkzeugreihe 2, 3 zur Fahrtrichtung 4 schräg angestellte Bodenwerkzeuge 5, insbesondere in Form von Schrägscheiben, wobei die Bodenwerkzeuge 5 gruppenweise zu unterschiedlichen Seiten hin zur Fahrtrichtung 4 schräg angestellt sind, können die Einebnungselemente 12 in einer Sektion 11B der Folgewerkzeugreihe 11, die einem Übergangsbereich zwschen unterschiedlich schräg angestellten Bodenwerkzeugen 5 der vorauslaufenden Bodenwerkzeugreihe 2, 3 hinterherläuft, eine größere Federsteifigkeit und/oder eine stärkere Vorspannung zum Boden hin besitzen als die Einebnungselemente 12 in einer Sektion 11A, 11C der Folgewerkzeugreihe 11, die einem Bereich gleich schräg angestellter Bodenwerkzeuge 5 hinterherläuft.

Wie Figur 18 und auch Figur 13 zeigt, können die mehreren Sektionen 11A-C der Folgewerkzeugreihe 11 in Fahrtrichtung 4 zueinander versetzt angeordnet sein, wobei insbesondere eine mittlere Sektion 11B in Fahrtrichtung 4 weiter vorne als seitliche Sektionen 11A, 11C angeordnet sein kann, vgl. Fig. 18.

Dabei kann die der Folgewerkzeugreihe 11 unmittelbar vorauslaufende Bodenwerkzeugreihe 3 über die Arbeitsbreite hinweg ohne Versatz in Fahrtrichtung 4 ausgebildet sein, so dass der Abstand zwischen der genannten Bodenwerkzeugreihe 3 und der Folgewerkzeugreihe 11 in den verschiedenen Sektionen 11A-C der Folgewerkzeugreihe 11 unterschiedlich ist, insbesondere in der mittleren Sektion 11B kleiner ist als in den seitlichen Sektionen, vgl. Fig. 18.

Die Sektionierung kann auch dazu genutzt werden, die seitlichen Sektionen 11A, 11C relativ zur mittleren Sektion 11B in eine Vorgewende- und/oder Transportstellung aufwippen zu können.

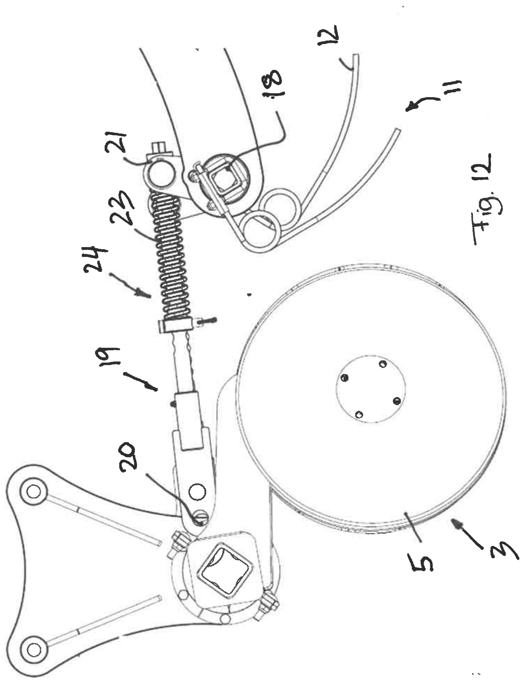

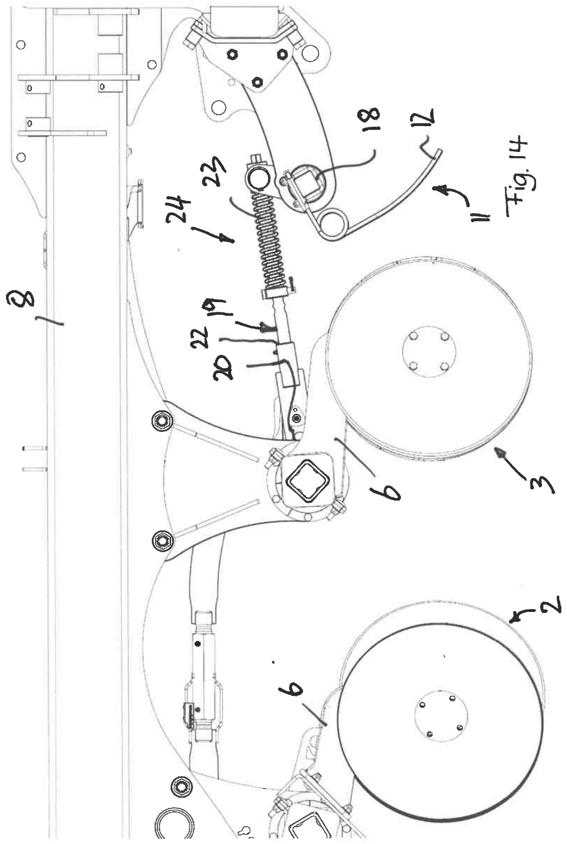

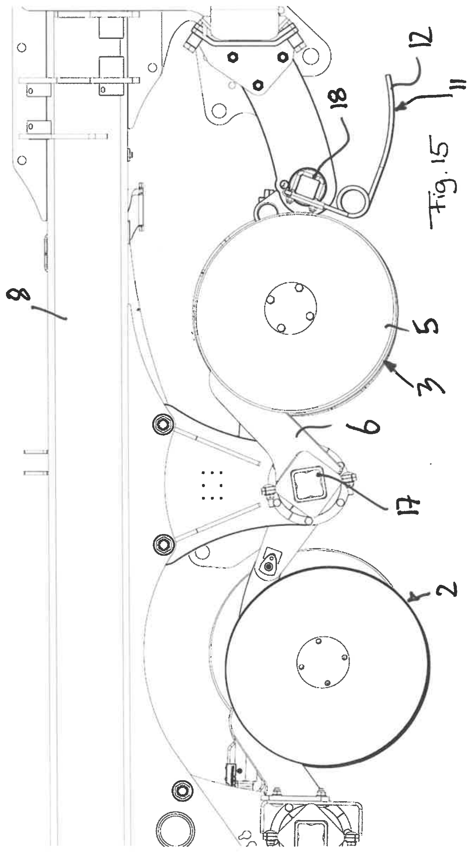

Unabhängig hiervon können nach einem weiteren Aspekt die Einebnungselemente 12 der Folgewerkzeugreihe 11 und die Bodenwerkzeuge 5 der zumindest einen vorauslaufenden Bodenwerkzeugreihe 2, 3 jeweils höhenverstellbar an einem Werkzeugreihenträger 18; 16, 17 gelagert sein, wobei - vorzugsweise zwischen dem Werkzeugreihenträger 18 der Folgewerkzeugreihe 11 und dem Werkzeugträger 16, 17 der vorauslaufenden Bodenwerkzeuge 2, 3 - eine Koppeleinrichtung 19 zur Steuerung der Höhenverstellbewegung der Einebnungselemente 12 in Abhängigkeit einer Höhenverstellbewegung der Bodenwerkzeuge 5 der vorauslaufenden Bodenwerkzeugreihe 2, 3 vorgesehen ist, vgl. Figuren 11 bis 16.

Dabei können die genannten Werkzeugreihenträger 16, 17; 18 jeweils schwenkbar, insbesondere schwenkbar um Trägerlängsachsen der Werkzeugreihenträger 16, 17; 18, gelagert sein, so dass durch Verschwenken der Werkzeugreihenträger 16, 17; 18 eine Höhenverstellung der daran gelagerten Bodenwerkzeuge 5 und der daran gelagerten Einebnungselemente 12 erfolgt, wobei die genannte Koppeleinrichtung 19 an den drehbar gelagerten Werkzeugträgern 16, 17; 18 drehfest befestigte Kurbelabschnitte 20, 21 umfasst, an denen eine Koppelstrebe 22 zum Koppeln der Höhenverstellbewegungen angelenkt ist, , vgl. Figuren 11 bis 16.

Vorzugsweise kann die genannte Koppelstrebe 22 ein Federbein 23 zum Vorspannen der Einebnungselemente 12 auf den Boden zu umfassen.

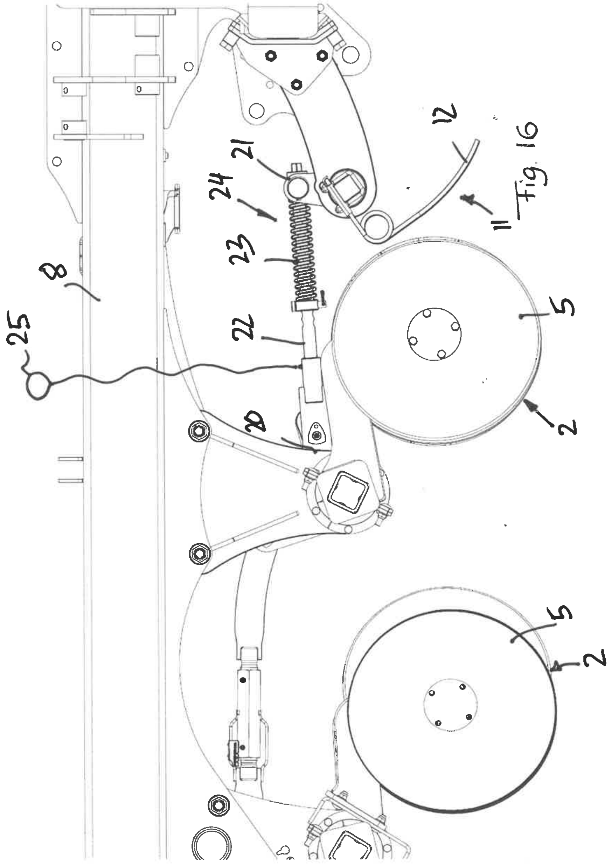

Unabhängig von einem solchen Federbein können ganz generell die Einebnungselemente 12 von einer Vorspanneinrichtung 24 mit verstellbarer Vorspannkraft auf den Boden zu vorspannbar sein, wobei eine Steuervorrichtung 25 zum veränderlichen Steuern der Vorspannkraft der Vorspanneinrichtung 24 in Abhängigkeit verschiedener Boden- und Betriebsparameter vorgesehen sein kann, vgl. bspw. Fig. 16.

Die Steuervorrichtung 25 ist dabei vorteilhafterweise dazu ausgebildet, die Vorspannkraft der Vorspanneinrichtung 24 unter Berücksichtigung eines Bodenparameters, der ein Aufwurfbild in Fahrtrichtung vor den Einebnungselementen 12 und/oder ein Einebnungsbild in Fahrtrichtung hinter den Einebnungselementen 12 charakterisiert, sowie in Abhängigkeit zumindest eines weiteren Betriebsparameters aus der Parametergruppe Fahrgeschwindigkeit, Arbeitstiefe und Bodenhärte zu steuern.

Insbesondere kann die Steuervorrichtung 25 dazu ausgebildet sein, die Vorspannung der Vorspanneinrichtung 24 bei stärker reliefartigem Aufwurf- und/oder Einebnungsbild zu erhöhen und auch bei zunehmender Fahrgeschwindigkeit und/oder zunehmender Arbeitstiefe und/oder zunehmender Bodenhärte zu erhöhen, wobei die Steuervorrichtung 25 dazu ausgebildet ist, bei gleichzeitig stärkerem reliefartigem Aufwurf- und/oder Einebnungsbild und gleichzeitig höher werdender Fahrgeschwindigkeit und/oder Arbeitstiefe und/oder Bodenhärte die Vorspannkraft vergleichsweise stärker zu erhöhen als bei nur stärker reliefartig werdendem Aufwurf- und/oder Einebnungsbild oder nur höher werdender Fahrgeschwindigkeit und/oder Arbeitstiefe und/oder Bodenhärte.

Wie schon erwähnt, kann vorteilhafterweise vorgesehen sein, dass die Bodenwerkzeuge 5 in zumindest einer oder jeder der Bodenwerkzeugreihen 2, 3 Schrägscheiben umfassen, die gruppenweise zu unterschiedlichen Seiten hin zur Fahrtrichtung schräg angestellt sind, wobei vorzugsweise auch hintereinander herlaufende Schrägscheibengruppen zu unterschiedlichen Seiten hin schräg zur Fahrtrichtung angestellt sind.

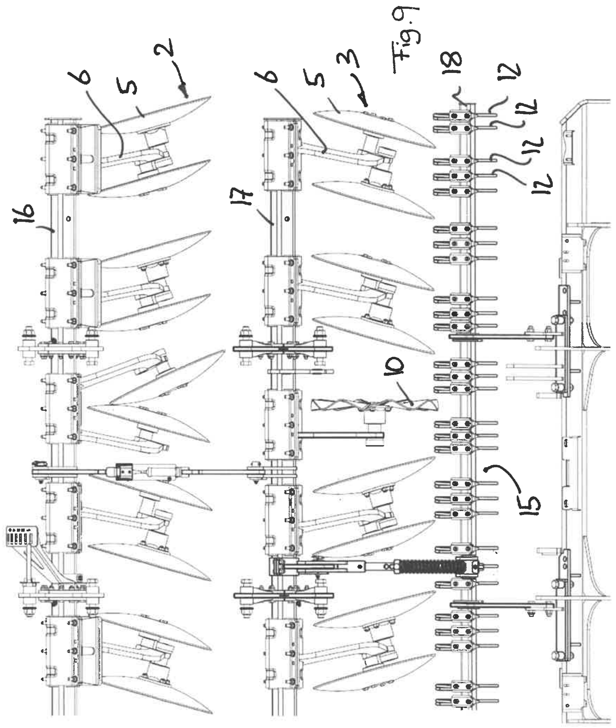

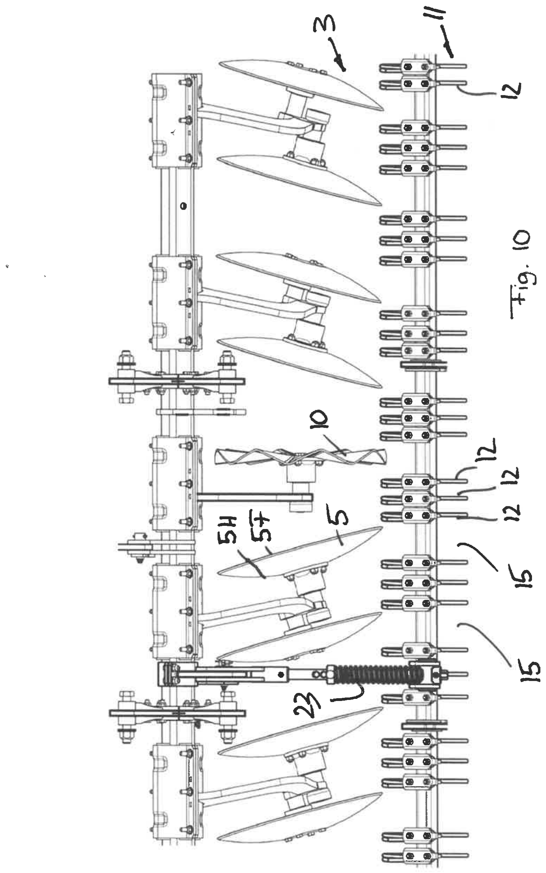

Dabei kann zumindest eine Bodenwerkzeugreihe 3 mittig zwischen den schräg angestellten Schrägscheibengruppen 5 eine Wellsechscheibe 10 aufweisen, die vorzugsweise fahrtrichtungsparallel angestellt und/oder in Fahrtrichtung auf Höhe der benachbarten Schrägscheiben 5 angeordnet ist, vgl. Fig. 9 und 10.

Insbesondere kann dabei vorgesehen werden, dass die Folgewerkzeugreihe 11 in der Fahrspur der Wellsechscheibe 10 eine Lücke 15 aufweist und/oder die Wellsechscheibe mit einem heckseitigen Endabschnitt in eine Lücke 15 der Folgewerkzeugreihe 11 hineinragt, vgl. Fig. 9 und 10.Wie Figur 9 weiterhin zeigt, kann die Wellsechscheibe 10 von ihrer Position her in die Scheibenreihe 3 mehr oder minder vollständig integriert bzw. eingegliedert ist.

Die genannte Wellsechscheibe 10 erstreckt sich vorzugsweise fahrtrichtungsparallel und kann eine Scheibendrehachse umfassen, die sich liegend quer zur Fahrtrichtung erstreckt.

Vorteilhafterweise ist die etwa mittig angeordnete Wellsechscheibe 10 in Fahrtrichtung weder nach vorne noch nach hinten versetzt, sondern im Wesentlichen in Fahrtrichtung auf derselben Höhe wie die benachbarten Schrägscheiben 5 angeordnet.

Wie Figur 9 oder auch 10 zeigt, können die Scheibenmittelpunkte der Schrägscheiben 5 der Bodenwerkzeugreihe 3 und der darin mittig eingegliederten Wellsechscheibe 10 zumindest näherungsweise auf einer gemeinsamen, gedachten Linie angeordnet sein, die sich quer zur Fahrtrichtung liegend erstreckt und die Längsachse der Werkzeugreihe definiert.

Wie Figur 9 zeigt, kann die Wellsechscheibe 10 in der nachlaufenden Bodenwerkzeugreihe 3 und/oder in der Bodenwerkzeugreihe 3, deren Schrägscheiben 5 nach innenwerfend angestellt sind, angeordnet sein. Wie eingangs erläutert, sind aber auch andere Konfigurationen möglich.

Die genannte Wellsechscheibe 10 kann eine, wie Figur 10 zeigt, in Umfangsrichtung mäandernde Wellenkontur besitzen, sodass die Wellsechscheibe an ihren Flanken in Umfangsrichtung abwechselnd ausbaucht und eingedellt ist. Unabhängig hiervon kann die Wellsechscheibe 10 an ihrer Umfangskontur eine zinnenförmig gezackte oder gewellte Kontur besitzen, wobei ggf. auch eine gleichmäßige, auf einem Hüllflächenzylinder liegende Umfangskontur vorgesehen sein kann.

Die Schrägscheiben 5 können an ihren Flanken glatt konturiert sein und/oder eine glatte Umfangskontur besitzen, wobei aber auch die Schrägscheiben 5 grundsätzlich flanken- und/oder umfangsseitig reliefartig konturiert sein können. Insbesondere können die Schrägscheiben 5, wie dies die Figuren zeigen, im Wesentlichen glatt ausgebildete, tellerförmige Hohlscheiben sein.

## Patentansprüche

1. Landwirtschaftliche Bodenbearbeitungsmaschine, mit zumindest einer oder zumindest zwei hintereinander angeordneten Bodenwerkzeugreihen (2, 3), die sich quer zur Fahrtrichtung (4) erstrecken und jeweils eine Vielzahl nebeneinander angeordnete Bodenwerkzeuge wie Schrägscheiben (5) zum Lockern und/oder Wenden des Bodens umfassen, sowie zumindest einer Folgewerkzeugreihe (11), die der zumindest einen Bodenwerkzeugreihe (2, 3) nachläuft und nebeneinander angeordnete Einebnungselemente (12) zum Einebnen von durch die Bodenwerkzeuge hinterlassenen Bodenunebenheiten wie Furchen (14) und/oder Dämmen (13) aufweist, **dadurch gekennzeichnet, dass** die Einebnungselemente (12) über die Arbeitsbreite der Folgewerkzeugreihe (11) ungleichmäßig verteilt angeordnet sind, wobei sich Einebnungselemente-Gruppen, die mehrere benachbarte Einebnungselemente (12) umfassen, mit Lücken (15), in denen die Folgewerkzeugreihe (11) keine Einebnungselemente (12) aufweist, abwechseln.

2. Landwirtschaftliche Bodenbearbeitungsmaschine nach dem vorhergehenden Anspruch, wobei die Lücken (15) in Fahrgassen benachbart zu Dammbildungsgassen, in denen die Bodenwerkzeuge (5) der vorauslaufenden Bodenwerkzeugreihe (3) Erddämme (13) aufwerfen, und/oder in Furchenbildungsgassen, in denen die Bodenwerkzeuge (5) der vorauslaufenden Bodenwerkzeugreihe (3) Furchen (14) hinterlassen, angeordnet sind.

3. Landwirtschaftliche Bodenbearbeitungsmaschine nach einem der vorhergehenden Ansprüche, wobei die der Folgewerkzeugreihe vorauslaufende Bodenwerkzeugreihe (3) zur Fahrtrichtung schräg angestellte Bodenwerkzeuge (5), insbesondere in Form von Schrägscheiben, aufweist, die eine der Fahrtrichtung (4) zugewandte Frontseite (5F) sowie eine von der Fahrtrichtung (4) abgewandte Heckseite (5H) besitzen, wobei die genannten Lücken (15) in der Folgewerkzeugreihe (11) jeweils in Fahrtrichtung (4) unmittelbar hinter und/oder im Fahrspurschatten der Heckseite (5H) eines Bodenwerkzeugs (5) der unmittelbar vorauslaufenden Bodenwerkzeugreihe (3) angeordnet sind und die Einebnungselemente-Gruppen jeweils in einem Abwurf- und/oder Ablegebereich (AB) der Frontseite (5F) eines Bodenwerkzeugs (5) der unmittelbar vorauslaufenden Bodenwerkzeugreihe (3) angeordnet sind.

4. Landwirtschaftliche Bodenbearbeitungsmaschine nach einem der vorhergehenden Ansprüche, wobei die Lücken (15) in der Folgewerkzeugreihe (11) mit heckseitigen Endabschnitten der Bodenwerkzeuge (5) der unmittelbar vorauslaufenden Bodenwerkzeugreihe (3) überlappen und die Bodenwerkzeuge (5) der unmittelbar vorauslaufenden Bodenwerkzeuge (3) sich mit ihren heckseitigen Endabschnitten jeweils in eine Lücke (15) der Folgewerkzeugreihe (11) hinein erstrecken, so dass quer zur Fahrtrichtung (4) betrachtet sich die heckseitigen Endabschnitte der Bodenwerkzeuge (5) mit frontseitigen Endabschnitten der Einebnungselemente (12) überlappen.

5. Landwirtschaftliche Bodenbearbeitungsmaschine nach einem der vorhergehenden Ansprüche, wobei die Lücken (15) der Folgewerkzeugreihe (11) eine Lückenbreite (A) besitzen, die mindestens doppelt so groß ist wie ein Werkzeugabstand (a) zwischen zueinander benachbarten Einebnungselementen (12) innerhalb einer Einebnungselemente-Gruppe und/oder über die gesamte Arbeitsbreite der Folgewerkzeugreihe (11) ein Verhältnis des von den Lücken (15) eingenommenen Arbeitsbreitenanteils zu dem von den Einebnungselemente-Gruppen eingenommenen Arbeitsbreitenanteil im Bereich von 30:70 bis 70:30 oder 40:60 bis 60:40 beträgt, insbesondere bei etwa 50:50 liegt.

6. Landwirtschaftliche Bodenbearbeitungsmaschine nach einem der vorhergehenden Ansprüche, wobei die Einebnungselemente (12) der Folgewerkzeugreihe (11) als Zinkenstriegel umfassend zumindest einen Federzinken ausgebildet sind, wobei die Federzinken der Einebnungselemente (12) der Folgewerkzeugreihe (11) bei Betrachtung in einer Richtung liegend quer zur Fahrtrichtung (4) vorzugsweise zumindest teilweise mit den Bodenbearbeitungswerkzeugen (5) der unmittelbar vorauslaufenden Bodenwerkzeugreihe (3) überlappen.

7. Landwirtschaftliche Bodenbearbeitungsmaschine nach einem der vorhergehenden Ansprüche oder nach dem Oberbegriff des Anspruchs 1, wobei die Folgewerkzeugreihe (11) über die Arbeitsbreite der Bodenbearbeitungsmaschine in verschiedene Sektionen (11A-C) unterteilt ist, wobei die Einebnungselemente (12) in den verschiedenen Sektionen (11A-C) unterschiedlich steif ausgebildet sind und/oder unterschiedlich stark auf den Boden zu vorgespannt sind.

8. Landwirtschaftliche Bodenbearbeitungsmaschine nach dem vorhergehenden Anspruch, wobei (a) in einer mittleren Sektion (11B) der Folgewerkzeugreihe (11), die eine Längsmittelebene der Bodenbearbeitungsmaschine enthält, die Einebnungselemente (12) eine größere Federhärte und/oder eine größere Steifigkeit und/oder eine stärkere Vorspannung auf den Boden zu besitzen als die Einebnungselemente (12) in einer oder jeder seitlichen Sektion (11A, 11C) der Folgewerkzeugreihe (11), die zu seitlichen Randabschnitten der Arbeitsbreite der Bodenbearbeitungsmaschine angeordnet sind, und/oder (b) in einer Sektion (11B) der Folgewerkzeugreihe (11), die einem Übergangsbereich zwischen gruppenweise unterschiedlich schräg zur Fahrtrichtung (4) angestellten Bodenwerkzeugen (5) der vorauslaufenden Bodenwerkzeugreihe (2, 3) hinterherläuft, eine größere Federsteifigkeit und/oder eine stärkere Vorspannung zum Boden hin besitzen als die Einebnungselemente (12) in einer Sektion (11A, 11C) der Folgewerkzeugreihe (11), die einem Bereich gleich schräg angestellter Bodenwerkzeuge (5) hinterherläuft.

9. Landwirtschaftliche Bodenbearbeitungsmaschine nach einem der vorhergehenden Ansprüche 7 oder 8, wobei die mehreren Sektionen (11A-C) der Folgewerkzeugreihe (11) in Fahrtrichtung (4) zueinander versetzt angeordnet sind, insbesondere eine mittlere Sektion (11B) in Fahrtrichtung (4) weiter vorne als seitliche Sektionen (11A, 11C) angeordnet ist, wobei die der Folgewerkzeugreihe (11) unmittelbar vorauslaufende Bodenwerkzeugreihe (3) über die Arbeitsbreite hinweg ohne Versatz in Fahrtrichtung (4) ausgebildet ist, so dass der Abstand zwischen der genannten Bodenwerkzeugreihe (3) und der Folgewerkzeugreihe (11) in den verschiedenen Sektionen (11A-C) der Folgewerkzeugreihe (11) unterschiedlich ist, insbesondere in der mittleren Sektion (11B) kleiner ist als in den seitlichen Sektionen.

10. Landwirtschaftliche Bodenbearbeitungsmaschine nach einem der Ansprüche 7 bis 9, wobei die seitlichen Sektionen (11A, 11C) relativ zur mittleren Sektion (11B) in eine Vorgewende- und/oder Transportstellung aufwippbar sind.

11. Landwirtschaftliche Bodenbearbeitungsmaschine nach einem der vorhergehenden Ansprüche oder dem Oberbegriff von Anspruch 1, wobei die Einebnungselemente (12) der Folgewerkzeugreihe (11) und die Bodenwerkzeuge (5) der zumindest einen vorauslaufenden Bodenwerkzeugreihe (2, 3) jeweils höhenverstellbar an einem Werkzeugreihenträger (18; 16, 17) gelagert sind, wobei zwischen dem Werkzeugreihenträger (18) der Folgewerkzeugreihe (11) und dem Werkzeugträger (16, 17) der vorauslaufenden Bodenwerkzeuge (2, 3) eine Koppeleinrichtung (19) zur Steuerung der Höhenverstellbewegung der Einebnungselemente (12) in Abhängigkeit einer Höhenverstellbewegung der Bodenwerkzeuge (5) der vorauslaufenden Bodenwerkzeugreihe (2, 3) vorgesehen ist.

12. Landwirtschaftliche Bodenbearbeitungsmaschine nach dem vorhergehenden Anspruch, wobei die genannten Werkzeugreihenträger (16, 17; 18) jeweils schwenkbar, insbesondere schwenkbar um Trägerlängsachsen der Werkzeugreihenträger (16, 17; 18), gelagert sind, so dass durch Verschwenken der Werkzeugreihenträger (16, 17; 18) eine Höhenverstellung der daran gelagerten Bodenwerkzeuge (5) und der daran gelagerten Einebnungselemente (12) vorsehbar ist, wobei die genannte Koppeleinrichtung (19) an den drehbar gelagerten Werkzeugträgern (16, 17; 18) drehfest befestigte Kurbelabschnitte (20, 21) umfasst, an denen eine Koppelstrebe (22) zum Koppeln der Höhenverstellbewegungen angelenkt ist, wobei die genannte Koppelstrebe (22) vorzugsweise ein Federbein (23) zum Vorspannen der Einebnungselemente (12) auf den Boden zu umfasst.

13. Landwirtschaftliche Bodenbearbeitungsmaschine nach einem der vorhergehenden Ansprüche oder dem Oberbegriff von Anspruch 1, wobei die Einebnungselemente (12) von einer Vorspanneinrichtung (24) mit verstellbarer Vorspannkraft auf den Boden zu vorspannbar sind, wobei eine Steuervorrichtung (25) zum veränderlichen Steuern der Vorspannkraft der Vorspanneinrichtung (24) in Abhängigkeit verschiedener Boden- und Betriebsparameter vorgesehen ist.

14. Landwirtschaftliche Bodenbearbeitungsmaschine nach dem vorhergehenden Anspruch, wobei die Steuervorrichtung (25) dazu ausgebildet ist, die Vorspannkraft der Vorspanneinrichtung (24) unter Berücksichtigung eines Bodenparameters, der ein Aufwurfbild in Fahrtrichtung vor den Einebnungselementen (12) und/oder ein Einebnungsbild in Fahrtrichtung hinter den Einebnungselementen (12) charakterisiert, sowie in Abhängigkeit zumindest eines weiteren Betriebsparameters aus der Parametergruppe Fahrgeschwindigkeit, Arbeitstiefe und Bodenhärte zu steuern, insbesondere dazu, die Vorspannung der Vorspanneinrichtung (24) bei stärker reliefartigem Aufwurf- und/oder Einebnungsbild zu erhöhen und auch bei zunehmender Fahrgeschwindigkeit und/oder zunehmender Arbeitstiefe und/oder zunehmender Bodenhärte zu erhöhen, wobei die Steuervorrichtung (25) dazu ausgebildet ist, bei gleichzeitig stärkerem reliefartigem Aufwurf- und/oder Einebnungsbild und gleichzeitig höher werdender Fahrgeschwindigkeit und/oder Arbeitstiefe und/oder Bodenhärte die Vorspannkraft vergleichsweise stärker zu erhöhen als bei nur stärker reliefartig werdendem Aufwurf- und/oder Einebnungsbild oder nur höher werdender Fahrgeschwindigkeit und/oder Arbeitstiefe und/oder Bodenhärte.

15. Landwirtschaftliche Bodenbearbeitungsmaschine nach einem der vorhergehenden Ansprüche, wobei die Bodenwerkzeuge (5) in zumindest einer oder jeder der Bodenwerkzeugreihen (2, 3) Schrägscheiben umfassen, die gruppenweise zu unterschiedlichen Seiten hin zur Fahrtrichtung schräg angestellt sind, wobei vorzugsweise auch hintereinander herlaufende Schrägscheiben-gruppen zu unterschiedlichen Seiten hin schräg zur Fahrtrichtung angestellt sind.

16. Landwirtschaftliche Bodenbearbeitungsmaschine nach dem vorhergehenden Anspruch, wobei zumindest eine Bodenwerkzeugreihe (3) mittig zwischen den schräg angestellten Schrägscheibengruppen (5) eine Wellsechscheibe (10) aufweist, die ein in Umfangsrichtung mäanderndes Wellenprofil und/oder einen Umfangsrand mit einer gezahnten oder gewellten Konturierung besitzt und/oder in eine Bodenwerkzeugreihe (3) eingegliedert ist, deren Bodenwerkzeuge (5) zur Reihenmitte hin werfend schräggestellt sind, wobei die Wellsechscheibe (10) vorzugsweise fahrtrichtungsparallel angestellt und/oder in Fahrtrichtung auf Höhe der benachbarten Schrägscheiben (5) angeordnet ist und/oder die Folgewerkzeugreihe (11) in der Fahrspur der Wellsechscheibe (10) eine Lücke (15) aufweist und/oder die Wellsechscheibe mit einem heckseitigen Endabschnitt in eine Lücke (15) der Folgewerkzeugreihe (11) hineinragt.
